# EUROPEAN PATENT SPECIFICATION

(11) **EP 3 271 240 B1**
(45) Date of publication and mention of the grant of the patent: **06.05.2020**
(21) Application number: 16715386.5
(22) Date of filing: 14.03.2016
(51) Int. Cl.: B63G 8/00, G05D 1/00, G05D 1/06, G05D 1/10

(54) **COMMUNICATIONS AMONG WATER ENVIRONMENT MOBILE ROBOTS**
KOMMUNIKATION ZWISCHEN MOBILEN ROBOTERN IN EINER WASSERUMGEBUNG
COMMUNICATIONS ENTRE DES ROBOTS MOBILES DE MILIEU AQUATIQUE

(30) Priority: 16.03.2015 US 201562133863 P
(43) Date of publication of application: 24.01.2018
(73) Proprietor: Saudi Arabian Oil Company, 31311 Dhahran (SA)
(72) Inventor: OUTA, Ali, Manhattan, NY, 10017 (US); ABDELLATIF, Fadl, Thuwal 23955-6900 (SA); PATEL, Sahejad, Thuwal 23955-6900 (SA); TRIGUI, Hassane, Thuwal 23955-6900 (SA); AMER, Ayman, Thuwal 23955-6900 (SA); OBEDAN, Ameen, Al, Dhahran (SA)
(74) Representative: Bittner, Thomas L.
(86) International application number: PCT/US2016/022340
(87) International publication number: WO 2016/149199

(56) References cited:
- FR-A1- 2 659 290
- JP-A- H03 266 794
- US-A- 5 579 285
- US-A1- 2003 167 998
- US-A1- 2008 144 442
- US-A1- 2009 114 140
- US-B2- 8 109 223

## Description

### FIELD OF THE INVENTION

A system, method, and devices for performing inspection of underwater assets including underwater pipelines and structures are provided that includes an underwater robot and a surface robot.

### BACKGROUND OF THE INVENTION

Mobile robots can play an integral role in the inspection of industrial infrastructure, including infrastructure located under water and in marine environments. Conventionally, in order to inspect the underwater infrastructure (e.g., under water pipelines), either human divers or remotely operated vehicles are used. However, using divers raises safety concerns and is expensive. Remotely operated vehicles eliminate many of the safety concerns associated by divers, but these vehicles require a support boat to store, launch, and provide a platform for human operators to control the vehicle. Such support boats have relatively large drafts and require a minimum water depth in which to safely operate. Accordingly, it is difficult to inspect infrastructure located in shallow water, areas close to the shore, and other hazardous areas because of the limitation of the support boat. As such, the use of mobile robots can allow for more efficient inspection of particular areas of an industrial complex.

Shallow waters introduce a big challenge in terms of accessibility as large ships, to which big working-class ROVs are tethered, cannot navigate these areas in fear of colliding with the seafloor. Therefore, small zodiacs (rubber boats) are used to access these areas but can only be used to deploy small observation-class ROVs. These ROVs are good enough for visual inspection but are not suitable for taking UT and CP measurements since subsea currents would move them around and prevent them from taking stable readings off the pipeline. Using divers for these tasks is extremely slow and inefficient due to the logistics related to navigating the boats in shallow waters. Inspection of shallow waters (0-10m depth) is typically performed primarily using divers and supported by diving support vessels and zodiacs. The process is slow and the average inspection speed is around 0.5 Km/day of underwater pipelines.

While underwater mobile robots provide inspection capability, if the support boat is located at large distances from the underwater mobile robot the robots cannot be effectively controlled and/or data cannot be effectively received from the robot because of the difficulties and limitations associated with underwater communication over long distances.

The present invention addresses these and other limitations associated with conventional inspection vehicles and inspection protocols.

Document FR 2 659 290 A1 discloses a system for undersea exploration with autonomous vessels consisting of a base ship, a first and an identical second undersea vessel, comprising an internal combustion engine, an electric motor/generator, and a battery. One of the undersea vessels travels beneath the water surface using its internal combustion engine, provided with air via a snorkel, and recharging its battery. It is in communication with the base ship via a radio link. The other undersea vessel travels fully immersed on its electric motor and is in communication with the first vessel via an acoustic and/or optical link. Once its battery is exhausted, the two vessels change places.

### SUMMARY OF THE INVENTION

According to an aspect of the present invention, there is provided a water environment robotic system according to claim 1, that includes a control station, an underwater robotic vehicle, and a water-surface robotic vehicle. First and second communication modules are associated with the underwater robotic vehicle and the water-surface robotic vehicle, respectively, wherein the first and second communication modules provide communication between the vehicles through the water. Third and fourth communication modules associated with the water-surface robotic vehicle and the control station, respectively, wherein the third and fourth communication modules provide communication between the water-surface robotic vehicle and the control station over air. The control station is configured to control operation of the underwater robotic vehicle using control signals that are communicated between the control station and the water-surface robotic vehicle via the third and fourth communication modules and are relayed by the water-surface robotic vehicle to the underwater robotic vehicle via the first and second communication modules. The underwater robotic vehicle is configured to transmit data collected by underwater robotic vehicle using data signals that are communicated between the underwater robotic vehicle and the water-surface robotic vehicle via the first and second communication modules and are relayed by the water-surface robotic vehicle to the control station via the third and fourth communication modules.

According to the present invention, the water environment robotic system includes an alignment control system. The alignment control system includes a position signal emitter associated with the underwater robotic vehicle and a position signal detector associated with the water-surface robotic vehicle, wherein the position signal emitter emits signals that are capable of being detected by the position signal detector. The alignment control system includes also includes an alignment control processor associated with the water-surface robotic vehicle that receives signal data from the position signal detector and determines the relative positions of the underwater robotic vehicle and the water-surface robotic vehicle.

According to the present invention, the water-surface robotic vehicle further includes a surface propulsion system and wherein the alignment control processor controls the operation of the surface propulsion system in order to move the water-surface robotic vehicle along the surface of the water in such a way as to maintain general vertical alignment between the water-surface robotic vehicle and the underwater robotic vehicle.

According to a further aspect of the present invention, the position signal emitter and the position signal detector is selected from the group comprising of LED light, acoustic, laser, and various combinations thereof.

According to another aspect of the present invention, the water environment robotic system further includes a tether extending between the water-surface robotic vehicle and the underwater robotic vehicle and an alignment control system associated with the water-surface robotic vehicle. The alignment control system includes sensors that provides tether force signal data related to forces on the tether and an alignment control processor that receives the tether force signal data and determines the relative positions of the underwater robotic vehicle and the water-surface robotic vehicle.

According to another aspect of the present invention, the first and second communication modules are configured to communicate using at least one of visible light, radio frequencies, laser light, acoustic communications, and a tether.

According to another aspect of the present invention, the water-surface robotic vehicle and the underwater robotic vehicle are configured to dock together.

According to a further aspect of the present invention, the water-surface robotic vehicle and the underwater robotic vehicle are configured to electrically couple to provide electrical power from the water-surface robotic vehicle to the underwater robotic vehicle.

According to a further aspect of the present invention, the water-surface robotic vehicle and the underwater robotic vehicle are configured to mechanically couple.

According to a further aspect of the present invention, the water-surface robotic vehicle is configured to provide at least one of pressurized water, compressed air, or sandblasting material and various combination thereof to the underwater robotic vehicle via at least one of a mechanical couple or a tether and various combinations thereof.

According to a further aspect of the present invention, the underwater robotic vehicle includes at least one underwater motion module and at least one underwater crawling module.

According to a further aspect of the present invention, the least one underwater motion module includes at least one of a vertical thruster, a horizontal thruster, or a buoyancy control device and various combinations thereof.

According to the present invention, the underwater robot has a plurality of legs coupled to a body and a crawling module for controlling the legs; the crawling module can further include at least one of a crawling skid, a track, a wheel, and various combinations thereof.

According to a further aspect of the present invention, the underwater robotic vehicle includes at least one environmental sensor.

According to a further aspect of the present invention, the at least one environmental sensor includes at least one of a camera, imaging sonar, altimeter, pressure sensor, depth sensor, or temperature sensor and various combinations thereof.

According to a further aspect of the present invention, the underwater robotic vehicle includes at least one inspection device.

According to a further aspect of the present invention, the at least one inspection device includes at least one of a ultrasonic testing probe, cathodic protection probe, eddy current probe, infrared camera, 3D scanning system, and various combinations thereof.

According to a further aspect of the present invention, the underwater robotic vehicle includes at least one marine life cleaning system.

According to a further aspect of the present invention, the system further including at least one additional water-surface robotic vehicle wherein the multiple water-surface robotic vehicles are in wireless communication to provide communication relay between the multiple water-surface robotic vehicles and the control unit.

### BRIEF DESCRIPTION OF THE DRAWINGS

FIG. 1 illustrates an underwater vehicle useful for understanding the invention;
FIG. 2 illustrates a surface vehicle according to an embodiment of the invention;
FIG. 3 illustrates the underwater vehicle and surface vehicle in operational relation to each other;
FIG. 4 illustrates the underwater vehicle, surface vehicle, and the control unit in operational relation to each other;
FIGS. 5A-D illustrate underwater vehicles useful for understanding the invention;
FIGS. 6 and 7 illustrate an underwater vehicle useful for understanding the invention;
FIGS. 8A and 8B illustrates a surface vehicle according to another embodiment of the invention; and
FIG. 9 illustrates a schematic of certain systems of the surface vehicle.

### DETAILED DESCRIPTION CERTAIN OF EMBODIMENTS OF THE INVENTION

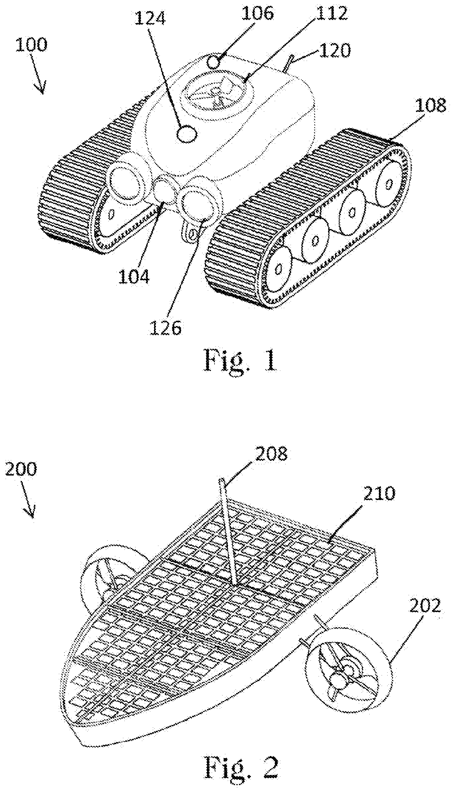

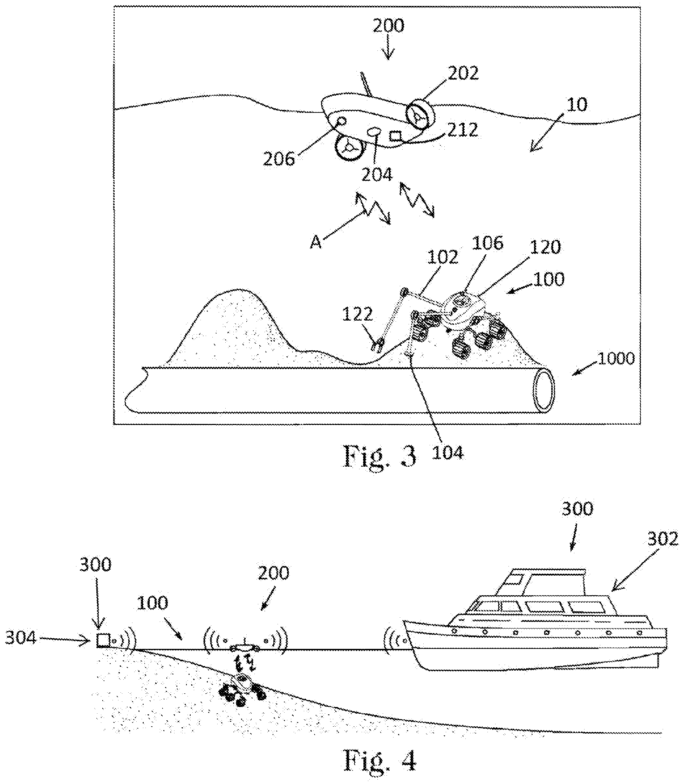

Referring to Figs. 1-3, an aquatic environment robotic system 10 includes an underwater robot 100 and a surface robot 200. The underwater robot 100 is structured so that it can dive under the surface of the water and perform various maintenance and inspection operations on underwater infrastructure. The surface robot 200 remains on the surface of the water and has its own propulsion system 202 so that it can move along the surface of the water in order to maintain close proximity to the underwater robot 100. As the underwater robot 100 moves underwater the surface robot 200 moves in a corresponding fashion in order to maintain proximity with the underwater robot. Since the surface robot 200 moves to stay in close proximity to the underwater robot 100, the distance between the two robots is maintained at a minimum. Accordingly, the communication distance through the water between the surface robot 200 and the underwater robot 100 is minimized. Minimizing the communication distance through the water is greatly advantageous because sending communication signals through water is difficult and increasing the distance through the water increases the difficulty and reduces the effectiveness of the communication. This is true for wireless communication through water because of signal loss and also for wired communication because of the need for longer tethers, which increases weight, expense, the potential for the tether becoming entangled.

As such, the surface robot 200 functions as a communication relay for the underwater robot 100. As the underwater 100 performs its various tasks, the surface robot 200 uses its propulsion system 202 to main a position approximately directly about the underwater robot 100. Some deviation between the alignment of the two robots is acceptable and the surface robot 200 can adjust its position to maintain the underwater robot 100 within an approximately 15 degree cone-shaped zone beneath the robot, and that zone can be expanded to about 45 degrees.

In order to maintain the relative positioning of the underwater robot 100 and the surface robot 200, the surface robot 200 can track the relative position of the underwater robot 100. The surface robot 200 can include a tracking module 204 that includes various sensors that can be used to determine the position of the underwater robot 100. For example, the tracking module can include an acoustic localization system to track and determine the position of the underwater robot 100. An acoustic localization system can include two acoustic transducers, one mounted on the surface robot 200 and one mounted on the underwater robot 100. An Ultra Short Base Line (USBL) system can be used to track the underwater vehicle. Using the two receivers, the surface vehicle mounted transceiver detects acoustic signals using the multiple transducer heads to determine the range of the underwater vehicle by the signal runtime and the direction of the underwater vehicle by the different time phase-shift detected by each transducer. For example, difference in the signal received at the various detectors can be used to determine the location of the underwater vehicle. The tracking range can exceed 500 m with 0.1m range accuracy and one degree bearing accuracy. The acoustic localization system is an example of a tetherless tracking system.

Other tracking and localization systems and methods can be used to track the position of the underwater robot 100. For example, a tether that extends between the surface robot 200 and the underwater robot 100 that includes sensors can be used for tracking. The tether can include a number of inertial measurement units/sensors along the length of the tether. As the tether moves, that movement can be sensed using the inertial measurement units, which can be in turn used to determine the position of the underwater robot 100 relative to the surface robot 200. An automated spool can be used on the surface robot 200 to automate the release and retrieval of the tether depending on the depth of the underwater vehicle. Three dimensional force or strain sensors can also be used on the surface robot tether spool to determine the angle at which the tether is pulled by the underwater robot 100, which can used to determine the position of the robot. Inertial measurement units can also be mounted on the surface robot 200 and the underwater robot as a means of determining the relative position and orientation of the two vehicles. A data fusion algorithm such as a Kalman filter can be used to fuse the various estimates acquired from the different tracking methods to obtain a more accurate estimation.

Once the underwater vehicle has been tracked, an intelligent control algorithm then takes the estimated location as a feedback signal and operates thrusters/propellers of the surface vehicle to follow the underwater vehicle and stay within a proximity above the underwater vehicle. The objective of the controller is to minimize the distance between the two vehicles and thus achieving a near vertical alignment. General vertical alignment can be maintained within 15 degrees and up to, for example, 45 degrees. The algorithm can be based on a PID controller, adaptive control, optimal control, or any other commonly used control strategy. It is worth mentioning that the operator will control the motion of the underwater vehicle while the surface vehicle autonomously drives itself and relays the communication back and forth between the operator and the underwater vehicle. In the case of losing the connection with the underwater robot, it will be possible to override the controller and navigate the surface vehicle manually via aerial communication by the operator directly.

The underwater vehicle/robot 100 can be capable of both floating/swimming underwater and landing/crawling on the seabed. The underwater robot can be equipped with a robotic arm 102 that can be controlled in various ways, including using a haptic device. The underwater robot can include a set of underwater inspection technologies 104 such as ultrasonic probes, cathodic protection probes, eddy current probes, camera(s), marine life cleaning system and so on.

Referring to Figs. 1-4, the underwater robot 100 can communicate using signals A (e.g., by light/led, laser, acoustic or via an umbilical) with the sea surface robotic boat 200 via communication modules 106 and 206 located on the underwater and surface robots, respectively.. The surface robot 200 acts as a router/repeater and relays via a over the air communication device back the communication (e.g., aerially using Radio Frequency or laser) to a control station 300. The control station 300 can be a land based station or can be a manned sea vessel. Multiple boats or stations can be used to relay the signal and extend the range.

The underwater robot 100 can dock with the surface robotic boat 200 for a variety of support functions. For example, the underwater robot can dock to the surface robot so that the underwater robot can recharge its onboard batteries. The surface robot can also provide the underwater robot with different materials such as pressurized water, compressed air and sand (for sandblasting) either by docking or through an umbilical cord. The surface robot can be powered by, for example, batteries, solar, combustion engine or any other source of energy. For example, as shown in Fig. 2, the surface robot 200 includes solar cells 210 for generating electricity. The robotic surface boat can use an intelligent control system such that the robotic surface boat will follow the underwater robot autonomously in order to maintain is relative position above the underwater robot.

Inspection of shallow water sites is a tedious and expensive task, the system 10 can enable the inspection of underwater assets 1000 that are in shallow waters, save money on inspection costs in terms of Diving Support Vessels (DSV) cost, divers cost and overall inspection cost by improving the inspection speed and efficiency and thus reducing the time to inspect these assets. The communication and docking system used by the underwater robot and surface robot could be adapted to use on a variety of robots.

The system 10 addresses challenges related the inspection in shallow water sites that are very difficult and expensive to access. By using an autonomous communication relay boat such as the surface robot 200, the operator ship 300 doesn't need to come close to the shallow area site. Moreover, having seafloor landing/crawling capabilities allow a small observation-class ROV to stabilize itself and take accurate readings usually only doable by working-class ROV.

In one embodiment, the underwater vehicle 100 can be a hybrid Crawler/ROV that can float and navigate using thrusters and buoyancy control. It can be equipped with batteries but can also be tethered. The underwater robot can also be equipped with pressure/depth sensors to control depth, and can have a GPS sensor to rectify position if it loses signal. The underwater robot can be equipped with imaging sonar and an altimeter for navigation in low visibility.

In the event of loss of signal, the underwater robot vehicle can navigate upward and once it is above water it can re-establish communication using, for example, a combination of RF and GPS.

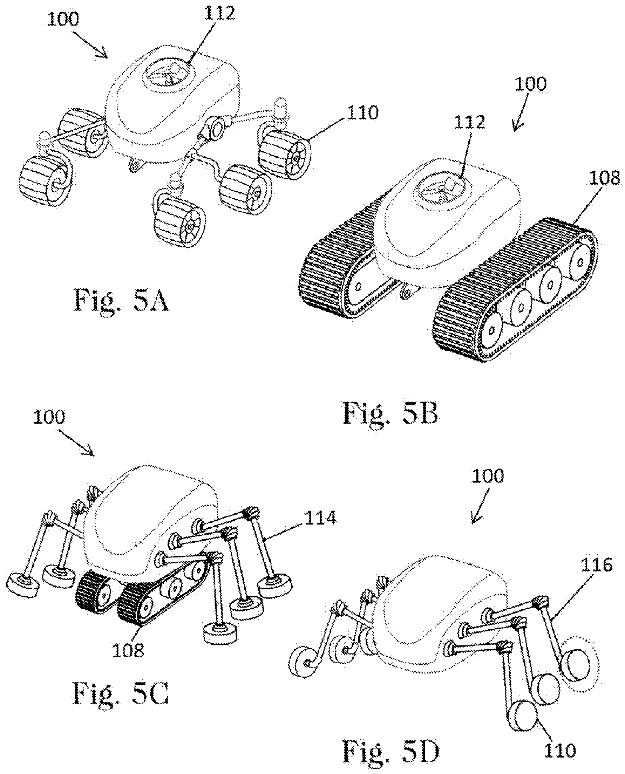

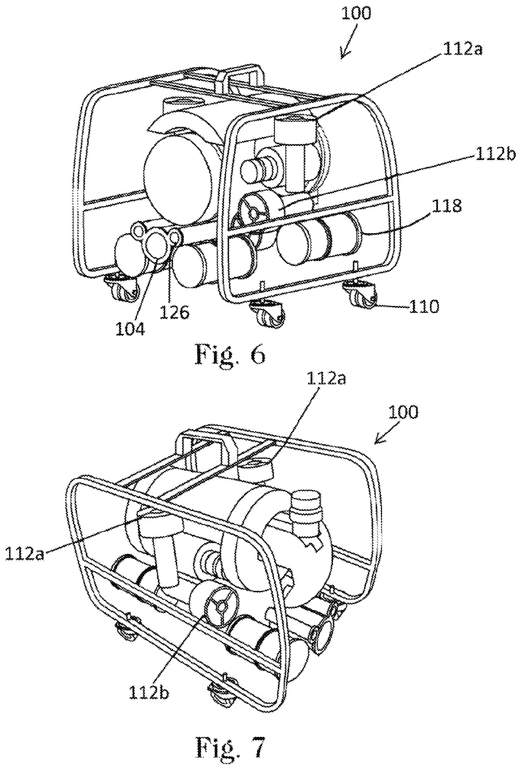

The vehicle can be equipped with either tanks treads 108 (Fig. 5B) or other crawling mechanism using suspended wheels 110 (Fig. 5A) to navigate on rough and uneven surfaces. Figures 5A-5D illustrate that the underwater robot 100 can include various means of propulsion, includes wheels 110 and thrusters 112 (Fig. 5A), treads 108 and thrusters 112 (Fig. 5B), treads 108 and legs 114 (Fig. 5C), and legs 116 and wheels 110 (Fig. 5D). One potential benefit of the crawler function is to allow navigation on the seabed that will save power and provide better control. Figures 6 and 7 illustrate another example of the underwater robot that includes horizontal and vertical thrusters 112, wheels 110, and buoyancy control devices 118.

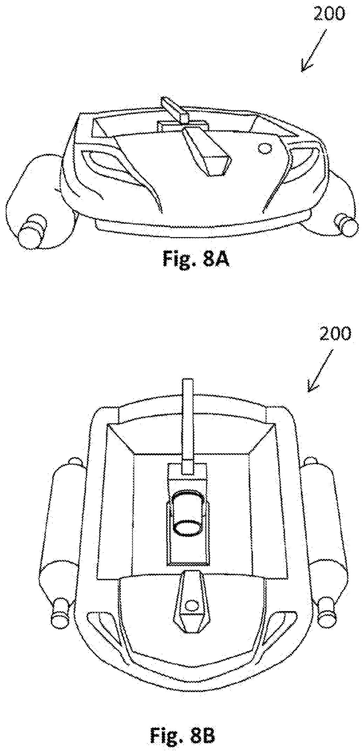

The surface robot 200 can be powered by, for example, solar cells 210, batteries, diesel engine or any other power source including energy harvesting techniques and can be equipped with a Radio Frequency (RF) module/antenna or wireless antenna 208 to communicate with an operator above water. Figures 8A and 8B illustrate one embodiment of a surface boat hull design that can be used.

Preferably, the surface robot 200 is constructed so that it is capable of floating on the surface of the water (e.g., such as a boat) and has its own propulsion system 202 so that it can move and navigate along the surface of the water. The surface robot 200 can be equipped with another communication module 206 located under water to communicate with the underwater vehicle 100. The underwater communication module 206 can be acoustic or RF that can reach up to 10 m underwater, for example. Another alternative for providing communication between the surface robot 200 and the underwater robot 100 can use LED communication that is multidirectional or laser communication that is unidirectional but can provide a much higher bandwidth (Gbps) and can require a complex laser tracking system to control the direction.

The surface robot 200 can also provide wireless/inductive charging to charge the batteries of the underwater vehicle 100 and can act as a docking station. Accordingly, the surface robot 200 can track to position of the underwater robot 100 and the surface robot can change its position on the water surface using its own propulsion system to maintain a close proximity to the underwater robot (e.g., the surface robot can maintain its position directly above the underwater robot). As the underwater robot moves along the sub-sea surface, the surface robot can track and move in conjunction with the underwater robot. As such, the surface robot provides a close-proximity support and communication relay for the underwater robot. If the underwater robot requires supplies (e.g., a battery charge) the underwater robot can move upwardly in the water column and dock with the surface robot. The docking can be physical/and or inductive so that supplies (e.g., battery charging) can be transferred from the surface robot to the underwater robot. Accordingly, the surface robot can include a docking device 212 and the and the underwater can include a corresponding docking device 120 that can be configured to provide non-physical and/or physical docking. The surface robot can include excess batteries (beyond what is required for its own operation) to charge the underwater robot, or can have other power generation capabilities (e.g., solar, combustion engine) that would not be practical for the underwater robot or would reduce the operation characteristics (size, weight, mobility) of the underwater robot.

The surface robot 200 can also be used as a signal repeater/extender or simply an underwater communication system (mobile router) that would be the median between the underwater vehicle and the operator who controls it (the underwater robot can also be autonomous or semi-autonomous, in which case the signal repeater can be used to transmit other data, such as inspection date, for example). The surface vehicle 200 can be equipped with a GPS system and follows the underwater vehicle continuously making sure it always beneath it, to achieve that the boat can use triangulations of acoustic signal coming from the vehicle. Accordingly, the surface vehicle 200 can be used to determine the actual position of the underwater vehicle 100 so that inspection data collected by the underwater robot can be associated with the geographic location of where that data has been collected. For example, the surface vehicle can determine the location of the underwater vehicle relative to it and the surface vehicle can determine its geographic location which can be used to determine the geographic location of the underwater vehicle.

As would be understood by those in the art of robotics, the surface vehicle can include electronic circuitry that includes a memory and/or computer readable storage medium which are configured to store information relating to the operation of the surface vehicle such as configuration settings and one or more control programs.

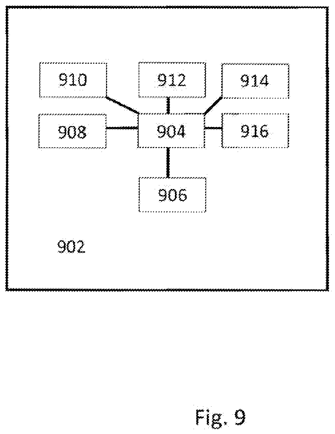

More specifically, referring to Fig. 9, surface vehicle can comprise a control module 902. The control module 902 can be arranged with various hardware and software components that serve to enable operation of the system, including a processor 904, a memory 906, a localization module 908, a propulsion module 910, an underwater communication module 912, an above water communication module 914, and a computer readable storage medium 916. The processor 904 serves to execute software instructions that can be loaded into the memory 906. The processor 904 can be a number of processors, a multi-processor core, or some other type of processor, depending on the particular implementation.

Preferably, the memory 906 and/or the storage 916 are accessible by the processor 904, thereby enabling the processor 904 to receive and execute instructions stored on the memory 906 and/or on the storage 916. The memory 906 can be, for example, a random access memory (RAM) or any other suitable volatile or non-volatile computer readable storage medium. In addition, the memory 906 can be fixed or removable. The storage 916 can take various forms, depending on the particular implementation. For example, the storage 916 can contain one or more components or devices such as a hard drive, a flash memory, a rewritable optical disk, a rewritable magnetic tape, or some combination of the above. The storage 916 also can be fixed or removable or remote such as cloud based data storage systems.

One or more software modules are encoded in the storage 916 and/or in the memory 906. The software modules can comprise one or more software programs or applications having computer program code or a set of instructions executed in the processor 904. Such computer program code or instructions for carrying out operations and implementing aspects of the systems and methods disclosed herein can be written in any combination of one or more programming languages. The program code can execute entirely on the surface vehicle 200, as a stand-alone software package, partly on the surface vehicle 200 and partly on a remote computer/device or entirely on such remote computers/devices. In the latter scenario, the remote computer systems can be connected to surface vehicle 200 through any type of network, including a local area network (LAN) or a wide area network (WAN), or the connection can be made through an external computer (for example, through the Internet using an Internet Service Provider).

Preferably, included among the software modules are a localization module 908, a propulsion module 910, an underwater communication module 912, and an above water communication module 914 that are executed by processor 904. During execution of the software modules, the processor 904 is configured to perform various operations relating to the configuration of the surface vehicle. In addition, it should be noted that other information and/or data relevant to the operation of the present systems and methods can also be stored on the storage 916, for instance various control programs used in the configuration of the surface vehicle 200.

Similarly, the underwater vehicle can include a control module that can be arranged with various hardware and software components that serve to enable operation of the system, including a processor, a memory, a localization module, a propulsion module, an underwater communication module, an inspection module, and a computer readable storage medium in order to execute the various functions of the underwater vehicle.

Referring to the underwater vehicle 100, a module composed of one or more robotic arms 102 that can use haptics to sense and feel underwater assets can be incorporated into the vehicle. Haptic feedback can be used to provide better control as a result of using force feedback sensors. This module would allow all sorts of activities that are typically conducted by divers to be done while the operator is in the control room above water.

In certain embodiments, the system can have a control station 300 that can use a haptic joystick to control the underwater robot and its robotic arm. The operator can also control and navigate the robotic surface boat, the underwater vehicle and manipulate the robotic arm remotely and perform the inspection activities.

The underwater robot 100 can be equipped with an inspection modules 104 that include non-destructive testing modules that can include, Ultrasonic Testing (UT) probes, eddy current probes (allowing inspection through concrete coating and marine life), cathodic protection (CP) survey probes, cameras including infrared cameras for visual inspection and other possible NDT sensors.

The underwater robot 100 can be equipped with a cleaning mechanism(s) 122 that use brushes, cavitation, water jet, sandblasting, or mechanical abrasion to clean marine growth (barnacles) that are residing on these underwater assets. For example, the surface robot boat can provide via an umbilical cord the jet of material or water to the underwater robot.

The underwater robot can have more than one camera mounted at different locations and angles.

According to certain embodiments, the offshore robotic system 10 can include at least underwater robotic subsystem 100 and at least one sea surface subsystem 200. The sea surface vehicle 200 can include at least one aerial communication module 208 to communicate with a control station that includes a controller for controlling the communications. Accordingly, the sea surface subsystem 200 acts as a router or repeater for the communication signal. The underwater robotic system 100 and the water surface subsystem 102 have at least one means of communication 106, 206 between the two devices. A controller can be used to control certain operations of the surface vehicle and underwater vehicle.

The underwater robot can include propulsion modules, which can include at least one underwater motion module 112a for providing it with depth control underwater in the water column and horizontal motion control modules 112b for providing movement through the water in horizontal directions. The propulsion modules can also include an underwater crawling module (e.g., controlling tracks 108, wheels 110, and legs 114 and 116) for landing, navigation and stabilization on the seabed for mobility along the seabed. The underwater motion module can include thrusters 112 to control the mobility underwater in different directions. The quantity, positions and orientations of the thrusters 112 determine the degrees of freedom of mobility of the underwater robot. The underwater motion module can include a buoyancy control device 118 and/or a vortex generator (e.g., vertical thruster propeller 112a) to regulate the depth of the robot and to modify the orientation of the underwater robot. The underwater motion module can also include horizontal thrusters 112b for horizontal movement. The underwater crawling module can include a crawling skid with treads 108 to navigate with high mobility over rough and uneven surfaces on the seabed. In addition to or alternatively, the underwater crawling module can include suspended wheels 110 similar to rocker boogie mechanisms to navigate with high mobility over rough and uneven surfaces on the seabed. The wheels 110 can also be mounted on actuated legs 116.

The underwater robotic subsystem can use a set of sensors 126 that include, but are not limited to, cameras, imaging sonars, altimeters, pressure and depth sensors, and temperature sensors that provide information about the surrounding environment and its physical properties.

The underwater robotic subsystem can include at least one robotic arm 102 to perform various tasks underwater, including inspection and manipulation tasks. The robotic arm 102 can use haptic feedback for easier control and perform better contact with the outside environment.

The underwater robotic subsystem can include at least one inspection/Non Destructing Testing (NDT) device 104 to perform various inspection tasks underwater typically performed by inspection divers. The NDT device 104 can be an Ultrasonic Testing (UT) probe to measure thickness of underwater assets and check for thickness loss that can be due to corrosion, erosion, cracks or any other anomalies. The NDT device can be a Cathodic Protection (CP) probe to inspect for CP anodes placed on underwater assets. The NDT device can be an Eddy Current (EC) testing probe to inspect for flaws and anomalies in underwater assets. The NDT device can be an infrared camera to detect leaks and temperature gradient to inspect for leaks. The NDT device can be a 3D scanning system to reconstruct the environment in 3D and detect the topography of the sea bed including free spans beneath underwater pipelines. The 3D scanning system can be a stereovision camera to measure CP anodes volume after 3D reconstruction and therefore detects anode depletion. The underwater robotic subsystem can include several NDT devices in various combinations and arrangements.

The underwater robotic system can include a marine life cleaning system 112 to remove barnacles and prepare the surfaces of underwater assets for inspection. The marine life cleaning system can use water jets and/or cavitation jets to clean and remove marine life from underwater assets. The marine life cleaning system can also include actuated brushes to clean and remove marine life. Additionally or alternatively, the marine life cleaning system set can use sand blasting to clean and remove marine life.

The sea surface subsystem is a remotely controlled robotic boat capable of navigating on the top of the water. In certain arrangements, the sea surface subsystem can be a floating balloon that is attached with an umbilical to the underwater subsystem and dragged along the surface of the sea as the underwater subsystem move below the water. In other arrangements, the sea surface subsystem can include a propulsion device 202 so that it can move autonomously in order to maintain vertical alignment through the water column with underwater robotic subsystem using an intelligent control technique. The control technique can use at least one detector 204 mounted beneath the sea surface subsystem 200 and at least on emitter 125 mounted on the underwater subsystem 100. The detector can be at least one camera mounted beneath the sea surface subsystem with a computer vision algorithm for segmentation in order to locate the underwater robotic subsystem. The emitter can be an array of light emitting diodes located on the underwater robotic subsystem can provide the required light to be detected by the camera in poor visibility. The control technique can also use acoustics in which the sea surface subsystem includes acoustic sensors to detect acoustic waves emitted by acoustics transducers mounted on the underwater robotic subsystem in order to determine the relative position of the sea surface subsystem compared to the sea surface subsystem. The control technique via acoustics can use triangulation of acoustic signals coming from at least two acoustic transducers mounted on the underwater robotic subsystem in order to determine its relative position compared to the sea surface subsystem. The control technique can also use an umbilical cord in arrangements in which an umbilical connects the subsystems to detect the dragging force direction of the underwater robotic subsystem in order to determine its relative position compared to the sea surface subsystem. The control technique can also use an actuated laser tracking system to track the underwater robotic subsystem in order to determine its relative position compared to the sea surface subsystem. Various combinations using more than one of these control techniques can be used to determine the relative position of the subsystems.

The aerial communication module 120, as discussed above, can use Radio Frequency (RF) to communicate with the control station 300. The control station can be located on a support boat 302 or on shore 304. The aerial communication module 120 can also use a laser communication system to communicate with the control station 300.

The sea surface and underwater subsystems can communicate with each other using visible light such as Light Emitting Diodes (LED). The subsystems can also communicate using radio frequency over short distances. The subsystems can also communicate using laser light, acoustic communications and/or an umbilical cord to communicate.

The sea surface subsystem 200 can also provide functionality to be a docking station for the underwater robotic subsystem 100. The docking station 212 can include an electric coupling device that is arranged to provide electrical coupling with the underwater robotic subsystem (e.g, to provide charging and/or data communication). Accordingly, the sea surface subsystem can charge the batteries of the power module of the underwater robotic subsystem. The electrical coupling can be achieved using an inductive coupling in which inductive charging can charge the batteries without having a physical electrical connection. The docking station function of the sea surface subsystem can include a mechanical couple for physically coupling with the underwater robotic subsystem. The sea surface subsystem can provide different material such as pressurized water, compressed air and sand (for sandblasting) either by docking or through an umbilical cord (not shown).

The underwater robotic subsystem 100 can be self-powered through its onboard batteries. Alternatively, or in addition, the underwater robotic subsystem can be powered by an umbilical cord (not shown) connected to the sea surface subsystem. The sea surface subsystem 200 can be powered by batteries, solar, combustion engine or any other source of energy including energy harvesting.

In certain arrangements, multiple sea surface subsystems 200 can be used to extend the range of the communication signal all the way to the control station. Accordingly, the multiple sea surface subsystems can act as signal repeaters. A multiple of the sea surface subsystems can also be used to enhance the localization and control strategy to determine the position of the underwater subsystem and maintain relative position to it.

The hybrid maneuverability of using an underwater subsystem moving on seabed and the sea surface subsystem floating above as in the system described herein is a novel arrangement that improves the process of inspection as it is more efficient and saves energy. Existing ROVs require umbilical cords that would necessitate DSVs' however shallow water sites can be inaccessible by them. Underwater communication with an underwater robotic system is a huge challenge that is addressed by introducing the autonomous sea surface robotic boat. Low visibility in shallow water is another challenge and hence introducing the crawling mechanism would enhance the visual inspection process as the underwater robot would not require activating its thrusters while navigating on the seabed resulting in enhanced visibility over just floating as it is the case in previous ROV technologies.

## Claims

1. A water environment robotic system, comprising:
- a control station (300);
- an underwater robot (100) having a body, a plurality of legs (114, 116) coupled to the body, thrusters (112) for underwater movement of the body, an underwater motion module for controlling the thrusters (112) and a crawling module for controlling the legs (114, 116) along the seabed;
- a water-surface robot (200);
- first and second communication modules (106, 206) associated with the underwater robot (100) and the water-surface robot (200), respectively, wherein the first and second communication modules (106, 206) provide communication between the robots (100, 200) through the water;
- third and fourth communication modules associated with the water-surface (200) and the control station (300), respectively, wherein the third and fourth communication modules provide communication between the water-surface robot (200) and the control station (300) over air; and
- an alignment control system, comprising:
- a position signal emitter (125) associated with the underwater robot (100);
- a position signal detector (204) associated with the water-surface robot (200), wherein the position signal emitter (125) emits signals that are capable of being detected by the position signal detector (204);
- a surface propulsion system (202); and
- an alignment control processor associated with the water-surface robot (200) that receives signal data from the position signal detector and determines a relative position of the underwater robot (100) with respect to the water-surface robot (200), the alignment control processor controlling operation of the surface propulsion system (202) to move the water-surface robot (200) along the surface of the water in such a way as to maintain a vertical alignment in a range of zero degrees to 45 degrees between the water-surface robot (200) and the underwater robot (100),
wherein the control station (300) is configured to control operation of the underwater robot (100) using control signals that are communicated between the control station (300) and the water-surface robot (200) via the third and fourth communication modules and are relayed by the water-surface robot (200) to the underwater robot (100) via the first and second communication modules (106, 206);
wherein the underwater robot (100) is configured to transmit data collected by underwater robot (100) using data signals that are communicated between the underwater robot (100) and the water-surface robot (200) via the first and second communication modules (106, 206) and are relayed by the water-surface robot (200) to the control station (300) via the third and fourth communication modules; and wherein the underwater motion module controls the thrusters (112) to provide the underwater movement and wherein the crawling module controls the legs (114, 116) for mobility along the seabed without requiring thruster activation by the underwater motion module.

2. The water environment robotic system of claim 1, wherein the position signal emitter (125) and the position signal detector (204) are, as a pair, selected from the group comprising of LED light, acoustic, laser, and various combinations thereof.

3. The water environment robotic system of claim 1, further comprising:
- a tether extending between the water-surface robot (200) and the underwater robot (100);
wherein the alignment control system associated with the water-surface robot (200) includes sensors that provides tether force signal data related to forces on the tether; and
wherein the alignment control processor is configured to receive the tether force signal data from the sensors and to determine the relative position of the underwater robot (100) with respect to water-surface robot (200).

4. The water environment robotic system of claim 1, wherein the first and second communication modules (106, 206) are configured to communicate using at least one of visible light, radio frequencies, laser light, acoustic communications, and a tether.

5. The water environment robotic system of claim 1, wherein the water-surface robot (200) is configured to provide at least one of pressurized water, compressed air, or sandblasting material and various combination thereof to the underwater robot (100) via at least one of a mechanical couple or a tether.

6. The water environment robotic system of claim 1, wherein the underwater motion module includes at least one of a vertical thruster, a horizontal thruster, or a buoyancy control device and various combinations thereof.

7. The water environment robotic system of claim 1, wherein the underwater crawling module further controls at least one of a crawling skid, a track, or a wheel.

8. The water environment robotic system of claim 1, wherein the underwater robot (100) includes at least one environmental sensor (126).

9. The water environment robotic system of claim 8, wherein the at least one environmental sensor (126) includes at least one of a camera, imaging sonar, altimeter, pressure sensor, depth sensor, or temperature.

10. The water environment robotic system of claim 1, wherein the underwater robot (100) includes at least one inspection device (104).

11. The water environment robotic system of claim 10, wherein the at least one inspection device (104) includes at least one of an ultrasonic testing probe, cathodic protection probe, eddy current probe, infrared camera, or a 3D scanning system, and various combinations thereof.

12. The water environment robotic system of claim 1, wherein the underwater robot (100) includes at least one marine life cleaning system (112).

13. The water environment robotic system of claim 1, further including at least one additional water-surface robot wherein the multiple water-surface robots are in wireless communication to provide communication relay between the multiple water-surface robots and the control station (300).

## Patentansprüche

1. Wasserumgebung-Robotersystem, umfassend:
- eine Steuerstation (300);
- einen Unterwasserroboter (100), welcher einen Körper, mehrere Beine (114, 116), die mit dem Körper gekoppelt sind, Strahlruder (112) zur Unterwasserbewegung des Körpers, ein Unterwasserbewegungsmodul zum Steuern der Strahlruder (112) und ein Kriechmodul zum Steuern der Beine (114, 116) entlang des Gewässerbodens aufweist;
- einen Wasseroberflächenroboter (200);
- ein erstes und zweites Kommunikationsmodul (106, 206), die dem Unterwasserroboter (100) bzw. dem Wasseroberflächenroboter (200) zugeordnet sind, wobei das erste und zweite Kommunikationsmodul (106, 206) eine Kommunikation zwischen den Robotern (100, 200) durch das Wasser vorsehen;
- ein drittes und viertes Kommunikationsmodul, die der Wasseroberfläche (200) bzw. der Steuerstation (300) zugeordnet sind, wobei das dritte und vierte Kommunikationsmodul eine Kommunikation zwischen dem Wasseroberflächenroboter (200) und der Steuerstation (300) über Luft vorsehen; und
- ein Ausrichtungssteuersystem, umfassend:
- einen Positionssignalgeber (125), der dem Unterwasserroboter (100) zugeordnet ist;
- einen Positionssignaldetektor (204), der dem Wasseroberflächenroboter (200) zugeordnet ist, wobei der Positionssignalgeber (125) Signale gibt, die durch den Positionssignaldetektor (204) erfasst werden können;
- ein Oberflächenantriebssystem (202); und
- einen Ausrichtungssteuerungsprozessor, der dem Wasseroberflächenroboter (200) zugeordnet ist, der Signaldaten von dem Positionssignaldetektor empfängt und eine relative Position des Unterwasserroboters (100) in Bezug auf den Wasseroberflächenroboter (200) bestimmt, wobei der Ausrichtungssteuerungsprozessor einen Betrieb des Oberflächenantriebssystems (202) steuert, um den Wasseroberflächenroboter (200) entlang der Oberfläche des Wassers in einer derartigen Weise zu bewegen, um eine vertikale Ausrichtung in einem Bereich von null Grad bis 45 Grad zwischen dem Wasseroberflächenroboter (200) und dem Unterwasserroboter (100) aufrechtzuerhalten,
wobei die Steuerstation (300) eingerichtet ist, um einen Betrieb des Unterwasserroboters (100) unter Verwendung von Steuersignalen zu steuern, die zwischen der Steuerstation (300) und dem Wasseroberflächenroboter (200) über das dritte und vierte Kommunikationsmodul kommuniziert und durch den Wasseroberflächenroboter (200) an den Unterwasserroboter (100) über das erste und zweite Kommunikationsmodul (10, 206) weitergeleitet werden;
wobei der Unterwasserroboter (100) eingerichtet ist, mittels des Unterwasserroboters (100) gesammelte Daten unter Verwendung von Datensignalen, welche zwischen dem Unterwasserroboter (100) und dem Wasseroberflächenroboter (200) über das erste und zweite Kommunikationsmodul (106, 206) kommuniziert und durch den Wasseroberflächenroboter (200) an die Steuerstation (300) über das dritte und vierte Kommunikationsmodul weitergeleitet werden, zu übertragen; und
wobei das Unterwasserbewegungsmodul die Strahlruder (112) steuert, um die Unterwasserbewegung vorzusehen, und wobei das Kriechmodul die Beine (114, 116) zur Bewegung entlang des Gewässerbodens steuert, ohne eine Strahlruder-Aktivierung durch das Unterwasserbewegungsmodul zu erfordern.

2. Wasserumgebung-Robotersystem nach Anspruch 1, wobei der Positionssignalgeber (125) und der Positionssignaldetektor (204), als ein Paar, aus der Gruppe ausgewählt sind, die eine LED-Leuchte, Akustik, Laser und verschiedene Kombinationen daraus umfasst.

3. Wasserumgebung-Robotersystem nach Anspruch 1, ferner umfassend:
- ein Halteseil, das sich zwischen dem Wasseroberflächenroboter (200) und dem Unterwasserroboter (100) erstreckt;
wobei das Ausrichtungssteuersystem, das dem Wasseroberflächenroboter (200) zugeordnet ist, Sensoren aufweist, die Halteseilkraft-Signaldaten bezüglich Kräften auf dem Halteseil vorsehen; und
wobei der Ausrichtungssteuerungsprozessor eingerichtet ist, die Halteseilkraft-Signaldaten von den Sensoren zu empfangen und die relative Position des Unterwasserroboters (100) in Bezug auf Wasseroberflächenroboter (200) zu bestimmen.

4. Wasserumgebung-Robotersystem nach Anspruch 1, wobei das erste und zweite Kommunikationsmodul (106, 206) eingerichtet sind, unter Verwendung mindestens eines aus sichtbarem Licht, Funkfrequenzen, Laserlicht, akustischen Kommunikationen und einem Halteseil zu kommunizieren.

5. Wasserumgebung-Robotersystem nach Anspruch 1, wobei der Wasseroberflächenroboter (200) eingerichtet ist, mindestens eines aus mit Druck beaufschlagtem Wasser, Druckluft oder Sandstrahlmaterial und verschiedenen Kombinationen daraus für das Unterwasserroboter (100) über mindestens eines aus einer mechanischen Kopplung oder einem Halteseil vorzusehen.

6. Wasserumgebung-Robotersystem nach Anspruch 1, wobei das Unterwasserbewegungsmodul mindestens eines aus einem vertikalen Strahlruder, einem horizontalen Strahlruder oder einer Auftrieb-Steuervorrichtung und verschiedenen Kombinationen daraus aufweist.

7. Wasserumgebung-Robotersystem nach Anspruch 1, wobei das Unterwasserkriechmodul ferner mindestens eines aus einer Kriechkufe, einer Bahn oder einem Rad steuert.

8. Wasserumgebung-Robotersystem nach Anspruch 1, wobei der Unterwasserroboter (100) mindestens einen Umgebungssensor (126) aufweist.

9. Wasserumgebung-Robotersystem nach Anspruch 8, wobei der mindestens eine Umgebungssensor (126) mindestens eines aus einer Kamera, einem Bilderzeugungssonar, einem Höhenmesser, einem Drucksensor, einem Tiefensensor oder einer Temperatur aufweist.

10. Wasserumgebung-Robotersystem nach Anspruch 1, wobei der Unterwasserroboter (100) mindestens eine Inspektionsvorrichtung (104) aufweist.

11. Wasserumgebung-Robotersystem nach Anspruch 10, wobei die mindestens eine Inspektionsvorrichtung (104) mindestens eines aus einer Ultraschallprüfungssonde, einer kathodischen Schutzsonde, einer Wirbelstromsonde, einer Infrarotkamera oder einem 3D-Scannsystem und verschiedenen Kombinationen daraus aufweist.

12. Wasserumgebung-Robotersystem nach Anspruch 1, wobei der Unterwasserroboter (100) mindestens ein Meeresleben-Reinigungssystem (112) aufweist.

13. Wasserumgebung-Robotersystem nach Anspruch 1, das ferner mindestens einen zusätzlichen Wasseroberflächenroboter aufweist, wobei die mehreren Wasseroberflächenroboter in drahtloser Kommunikation stehen, um eine Kommunikationsweiterleitung zwischen den mehreren Wasseroberflächenrobotern und der Steuerstation (300) vorzusehen.

## Revendications

1. Système robotique d'environnement aquatique, comprenant :
- une station de commande (300) ;
- un robot sous-marin (100) présentant un corps, une pluralité de jambes (114, 116) accouplées au corps, des propulseurs (112) pour le déplacement du corps sous l'eau, un module de déplacement sous-marin pour la commande des propulseurs (112) et un module rampant pour la commande des jambes (114, 116) le long du fond marin ;
- un robot de surface aquatique (200) ;
- des premier et deuxième modules de communication (106, 206) associés au robot sous-marin (100) et au robot de surface aquatique (200), respectivement, les premier et deuxième modules de communication (106, 206) fournissant une communication entre les robots (100, 200) à travers l'eau ;
- des troisième et quatrième modules de communication associés au robot de surface aquatique (200) et à la station de commande (300), respectivement, les troisième et quatrième modules de communication fournissant une communication aérienne entre le robot de surface aquatique (200) et la station de commande (300) ; et
- un système de commande d'alignement, comprenant :
- un émetteur de signaux de position (125) associé au robot sous-marin (100) ;
- un détecteur de signaux de position (204) associé au robot de surface aquatique (200), l'émetteur de signaux de position (125) émettant des signaux susceptibles d'être détectés par le détecteur de signaux de position (204) ;
- un système de propulsion de surface (202) ; et
- un processeur de commande d'alignement associé au robot de surface aquatique (200), lequel reçoit des données de signal à partir du détecteur de signaux de position et détermine un position relative du robot sous-marin (100) par rapport au robot de surface aquatique (200), le processeur de commande d'alignement commandant le fonctionnement du système de propulsion de surface (202) pour déplacer le robot de surface aquatique (200) le long de la surface de l'eau de manière à maintenir un alignement vertical dans une plage de zéro degrés à 45 degrés entre le robot de surface aquatique (200) et le robot sous-marin (100),
dans lequel la station de commande (300) est configurée pour commander le fonctionnement du robot sous-marin (100) à l'aide de signaux de commande communiqués entre la station de commande (300) et le robot de surface aquatique (200) par le biais des troisième et quatrième modules de communication et transmis par le robot de surface aquatique (200) au robot sous-marin (100) par le biais des premier et deuxième modules de communication (106, 206) ;
dans lequel le robot sous-marin (100) est configuré pour transmettre des données collectées par le robot sous-marin (100) à l'aide de signaux de données communiqués entre le robot sous-marin (100) et le robot de surface aquatique (200) par le biais des premier et deuxième modules de communication (106, 206) et transmis par le robot de surface aquatique (200) à la station de commande (300) par le biais des troisième et quatrième modules de communication ; et
dans lequel le module de déplacement sous-marin commande les propulseurs (112) pour assurer le déplacement sous l'eau et dans lequel le module rampant commande les jambes (114, 116) pour un déplacement le long du fond marin sans nécessiter d'activation des propulseurs par le module de déplacement sous-marin.

2. Système robotique d'environnement aquatique selon la revendication 1, dans lequel l'émetteur de signaux de position (125) et le détecteur de signaux de position (204) sont, en tant que paire, sélectionnés parmi le groupe comprenant un éclairage DEL, acoustique, laser ou différentes combinaisons de ceux-ci.

3. Système robotique d'environnement aquatique selon la revendication 1, comprenant en outre :
- une amarre s'étendant entre le robot de surface aquatique (200) et le robot sous-marin (100) ;
dans lequel le système de commande d'alignement associé au robot de surface aquatique (200) comprend des capteurs fournissant des données de signaux de force d'amarre relatives aux forces sur l'amarre ; et
dans lequel le processeur de commande d'alignement est configuré pour recevoir les données de signaux de force d'amarre depuis les capteurs et pour déterminer la position relative du robot sous-marin (100) par rapport au robot de surface aquatique (200).

4. Système robotique d'environnement aquatique selon la revendication 1, dans lequel les premier et deuxième modules de communication (106, 206) sont configurés pour communiquer à l'aide de l'une au moins parmi une lumière visible, des fréquences radio, une lumière laser, des communications acoustiques, et une amarre.

5. Système robotique d'environnement aquatique selon la revendication 1, dans lequel le robot de surface aquatique (200) est configuré pour fournir l'un au moins parmi de l'eau sous pression, de l'air comprimé, ou un matériau de décapage au sable et différentes combinaisons de ceux-ci, au robot sous-marin (100), par le biais de l'un au moins parmi un couple mécanique et une amarre.

6. Système robotique d'environnement aquatique selon la revendication 1, dans lequel le module de déplacement sous-marin comprend l'un au moins parmi une amarre verticale, une amarre horizontale ou un dispositif de commande de flottaison et différentes combinaisons de ceux-ci.

7. Système robotique d'environnement aquatique selon la revendication 1, dans lequel le module rampant sous-marin commande l'un au moins parmi un patin rampant, une piste ou une roue.

8. Système robotique d'environnement aquatique selon la revendication 1, dans lequel le robot sous-marin (100) comprend au moins un capteur environnemental (126).

9. Système robotique d'environnement aquatique selon la revendication 8, dans lequel l'au moins un capteur environnemental (126) comprend l'un au moins parmi une caméra, un sonar d'imagerie, un altimètre, un capteur de pression, un capteur de profondeur ou de température.

10. Système robotique d'environnement aquatique selon la revendication 1, dans lequel le robot sous-marin (100) comprend au moins un dispositif d'inspection (104).

11. Système robotique d'environnement aquatique selon la revendication 10, dans lequel l'au moins un dispositif d'inspection (104) comprend l'un au moins parmi une sonde de test ultrasonique, une sonde de protection cathodique, une sonde à courant de Foucault, une caméra infrarouge, ou un système de balayage 3D, et différentes combinaisons de ceux-ci.

12. Système robotique d'environnement aquatique selon la revendication 1, dans lequel le robot sous-marin (100) comprend au moins un système de nettoyage de vie marine (112).

13. Système robotique d'environnement aquatique selon la revendication 1, comprenant en outre au moins un robot de surface d'eau supplémentaire, dans lequel la multitude de robots de surface d'eau sont en communication sans fil pour fournir un relais de communication entre la multitude de robots de surface d'eau et la station de commande (300).
